# EUROPÄISCHE PATENTSCHRIFT

(11) **EP 0 699 853 B1**
(45) Veröffentlichungstag und Bekanntmachung des Hinweises auf die Patenterteilung: **10.09.1997**
(21) Anmeldenummer: 95110887.7
(22) Anmeldetag: 12.07.1995
(51) Int. Cl.: F16H 61/34, F16H 59/04, F16H 61/24, F16H 61/36

(54) **Betätigungseinrichtung zum Steuern des Gangwechsels eines Kraftfahrzeuggetriebes**
Mechanism for transmitting movement of vehicle gear selector
Tringlerie de sélection des vitesses pour boîte de vitesse d'un véhicule

(30) Priorität: 09.08.1994 DE 4428206
(43) Veröffentlichungstag der Anmeldung: 06.03.1996
(73) Patentinhaber: Bayerische Motoren Werke Aktiengesellschaft, 80788 München (DE)
(72) Erfinder: Sellei, Gustav, D-80804 München (DE); Blechl, Norbert, D-81541 München (DE); Pour, Rahim, Dr., D-85748 Garching (DE); Liebl, Johannes, D-85368 Moosburg (DE)

(56) Entgegenhaltungen:
- GB-A- 2 068 065
- US-A- 4 524 634
- US-E- R E31 451
- PATENT ABSTRACTS OF JAPAN vol. 950 no. 001 & JP-A-07 012219 (FUJI KIKO CO LTD) 17.Januar 1995,

## Beschreibung

Die Erfindung betrifft eine Betätigungseinrichtung zum Steuern des Gangwechsels eines Kraftfahrzeuggetriebes nach dem Oberbegriff des Hauptanspruchs.

Eine derartige Betätigungseinrichtung gemäß US-A 4 543 842 ist vom Getriebe getrennt am Kraftfahrzeug angebracht. Dort werden die Schalt- und Wählbewegungen, die der Fahrer mit dem Schalthebel ausführt, über zwei Schaltzüge zum Getriebe übertragen. Am Schalthebel ist eine Kugel ausgebildet, über die dieser in einem fahrzeugfesten Gehäuse in alle Richtungen bewegbar festgelegt ist. In den Kugelachsen besitzt der Schalthebel eine nach unten und eine zu den Seiten hin weisende Verlängerung mit einem jeweils sphärisch ausgebildeten Lagerende. An diesem Lagerende ist bei der Schalthebelverlängerung nach unten der Schaltzug für die Übertragung der Schaltbewegung befestigt. Der Schaltzug zur Übertragung der Wählbewegung ist an einem Arm eines im Gehäuse der Betätigungseinrichtung schwenkbar gelagerten Winkelhebels befestigt, der mit seinem anderen Arm mit der Verlängerung des Schalthebels zur Seite hin verbunden ist.

Im fahrzeugfesten Gehäuse der Betätigungseinrichtung ist eine Feder untergebracht, die mit der Verlängerung des Schalthebels zur Seite hin unter Vorspannung steht und den Schalthebel, sofern dieser sich in der Wählgasse befindet, in eine bestimmte Neutralposition zurückstellt. Desweiteren dient diese Feder zum Aufbringen einer Widerstandskraft beim Auslenken des Schalthebels aus seiner Neutralposition, wenn eine Schaltgasse ausgewählt wird.

Bei einer solchen Betätigungseinrichtung ist beim Schalten der Gänge in den Schaltgassen am Schalthebel keine haptische Rückmeldung fühlbar, die dem Fahrer signalisiert, daß ein Gang eingelegt ist. Außerdem ist bei eingelegtem Gang der Schalthebel durch versehentliches Berühren leicht in die Neutralposition verschiebbar. Geschieht dies unter Last, kann das Getriebe beschädigt werden.

Weiterhin ist aus der US-Re 31 451 eine gattungsähnliche Einrichtung bekannt, bei der die Betätigungseinrichtung eine Arretiereinrichtung zur Sicherung der Schalthebelpositionen in den Schaltgassen besitzt, die mit einer Feder und Rastelementaufnahme arbeitet.

Deshalb ist es Aufgabe der Erfindung, eine Betätigungseinrichtung zum Steuern des Gangwechsels eines Getriebes nach dem Oberbegriff des Hauptanspruchs so auszubilden, daß der Fahrer des Kraftfahrzeuges beim Schalten der Gänge in den Schaltgassen eine haptische Rückmeldung des Vollzugs des Gangwechsels bekommt.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung besitzt die vom Getriebe getrennte Betätigungseinrichtung eine Arretiereinrichtung zur Sicherung der Schalthebelpositionen in den Schaltgassen. Das hat den Vorteil, daß die haptische Rückmeldung eines Gangwechsels in einer Schaltgasse direkt in der Betätigungseinrichtung erzeugt wird. Die Elastizität der gesamten Bewegungsübertragungseinrichtung bis zum Getriebe ist für die haptische Rückmeldung unerheblich und es entsteht dadurch ein exaktes Schaltgefühl. Nach der Erfindung besteht die Rückführ- und Widerstandseinrichtung aus einem Rastelement und einem Kurvenelement, die gegeneinander verschiebbar und in einer Position zueinander festlegbar sind. Dadurch kann vorteilhafterweise in der Wählrichtung des Schalthebels besonders einfach ein unregelmäßiger Betätigungskraftverlauf verwirklicht werden.

Bei einer bevorzugten Ausführung der Erfindung besteht die Arretiereinrichtung aus einem weiteren Rastelement und einem weiteren Kurvenelement, die gegeneinander verschiebbar und in drei verschiedenen Positionen zueinander festlegbar sind.

Das hat den Vorteil, daß alle Positionen des Schalthebels entlang einer Schaltgasse von der Arretiereinrichtung gesichert gehalten werden. Sowohl die, in denen ein Gang eingelegt ist, als auch die, in der sich der Schalthebel in Neutralposition befindet. Außerdem müssen im Getriebe keine Anschläge mehr an den Schaltstangen vorhanden sein.

Werden die Rastelemente an ihren zugehörigen Kurvenelementen durch die Kraft je einer vorgespannten Feder anliegend gehalten, so entsteht eine vorteilhaft einfache und kostengünstige Ausführung des Betätigungselements, bei dem sowohl die Positionen des Schalthebels in der Schaltgasse rastend getrennt werden, als auch dessen Neutralposition in der Wählgasse zuverlässig eingestellt wird.

Bei einer weiteren vorteilhaften Ausführung der Erfindung besteht das weitere Rastelement für die Schaltbewegung aus einer zum Drehmittelpunkt des Schalthebels hin gerichteten, in Verlängerung der Wählachse am Kugelelement angebrachten rohrförmigen Aufnahme für eine durch eine weitere Feder belastete Kugel. Diese wälzt an dem am Gehäuse angebrachten weiteren Kurvenelement ab. Das Rastelement wird durch einen Schenkel eines in der Schaltachsenebene parallel zur Schaltachse schwenkbar im Gehäuse gelagerten Winkelhebels gebildet. Gegen diesen Schenkel des Winkelhebels wird unter Federvorspannung ein im Gehäuse parallel zur Schaltachse an einem Ende schwenkbar gelagerter Schlepphebel gehalten, dessen Oberfläche teilweise das Kurvenelement bildet.

Bei dieser Ausführungsform der Erfindung kann das Gehäuse der Betätigungseinrichtung sehr klein gehalten werden. Die Betätigungseinrichtung besitzt wenig Bauteile und ist deshalb kostengünstig herzustellen.

Vorteilhafterweise werden die Rast- und Kurvenelemente in weiteren Ausbildungen der Erfindung so ausgeführt, daß die haptische Rückmeldung an den Fahrer eindeutig ist. Dieses wird erreicht, wenn die Oberfläche des weiteren Kurvenelements symmetrisch, regelmäßig geteilt, höckerartig mit drei dazwischen liegenden Vertiefungen ausgebildet ist, während das Kurvenelement als eine Vertiefung mit unregelmäßig, unsymmetrisch ansteigenden Flanken gestaltet ist. Dabei erhöhen Endanschläge für die Rastelemente an den Enden der Abwälzflächen der Kurvenelemente die Funktionssicherheit der Betätigungseinrichtung.

Ein bevorzugtes Ausführungsbeispiel der Erfindung ist in der nachfolgenden Beschreibung und der zugehörigen Zeichnung näher dargestellt. Es zeigen:
Figur 1 eine räumliche, schematische Darstellung der Betätigungseinrichtung, und
Figur 2 eine Ansicht der Betätigungseinrichtung mit längs aufgeschnittenem Gehäuse .

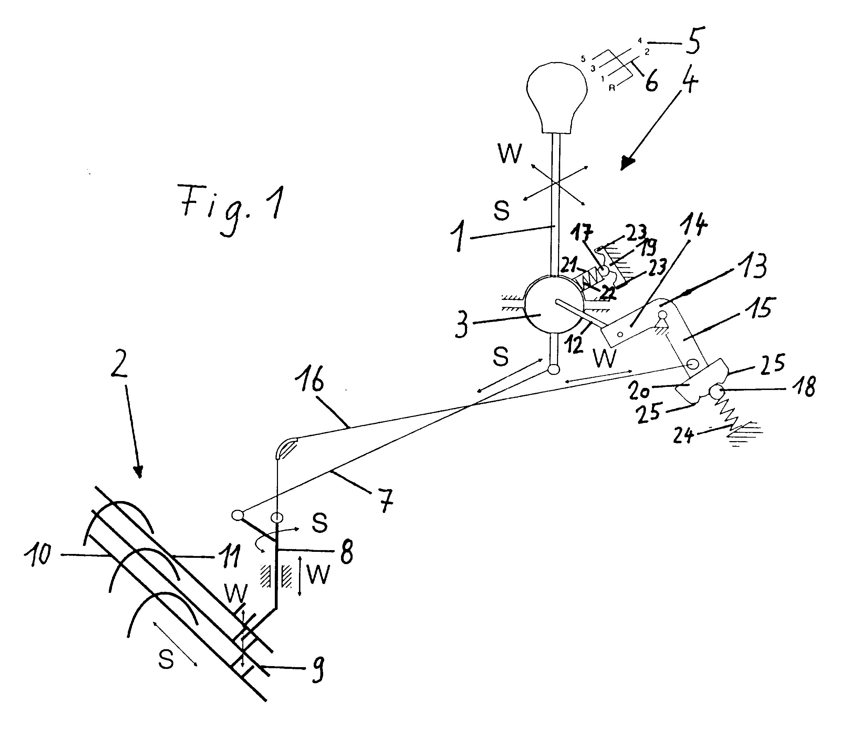

Die räumliche, schematische Darstellung in Figur 1 zeigt einen Schalthebel 1, der, getrennt von einem Getriebe 2, über ein Kugelelement 3 in einer Betätigungseinrichtung 4 fahrzeugfest in alle Richtungen bewegbar gelagert ist. Durch Doppelpfeile mit den Kennzeichnungen W und S wird in der Zeichnung dargestellt, wie ein Schaltschema 5 durch Wählbewegung (W) und Schaltbewegung (S) über den Schalthebel 1 zum Getriebe 2 übertragen wird. Bewegt man den Schalthebel 1 entlang der Pfeilrichtung der Schaltbewegung S zum Beispiel in einer Schaltgasse 6 zum Schalten des ersten bzw. zweiten Ganges, so wird die Bewegung durch das untere Ende des Schalthebels 1 über einen Seilzug 7 auf die Schaltwelle 8 übertragen. Durch die dadurch ausgelöste Rotation der Schaltwelle 8 wird im Getriebe 2 die Schaltstange 9 verschoben und damit entweder das nicht gezeichnete Zahnrad des ersten oder des zweiten Ganges in Antriebsverbindung gebracht.

Die Schaltstangen 10 oder 11 werden statt der Schaltstange 9 bei Auswahl einer anderen Schaltgasse, zum Beispiel der des dritten und vierten Ganges, durch die Schaltwelle 8 verschoben. Die Auswahl der gewünschten Schaltgasse erfolgt durch die Wählbewegung des Schalthebels 1 in Richtung des mit W gekennzeichneten Doppelpfeiles. Diese Schalthebelbewegung wird durch einen am Kugelelement 3 in Verlängerung der Achse der Schaltbewegung angebrachten, nach der Seite gerichteten Fortsatz 12 übertragen. Der seitliche Fortsatz 12 bewegt sich dabei vertikal und schwenkt einen ebenfalls in der Horizontalebene der Schaltachse gelagerten Winkelhebel 13, dessen einer Schenkel 14 kardanisch beweglich an dem seitlichen Fortsatz 12 angebracht ist. Ein anderer Schenkel 15 des Winkelhebels 13 ist über einen weiteren Seilzug 16 so mit der Schaltwelle 8 verbunden, daß ein Schwenken des Winkelhebels 13 die Schaltwelle 8 translatorisch in Richtung des mit W gekennzeichneten Doppelpfeiles bewegt. Dabei wird die gewünschte Schaltstange 9 oder 10 oder 11 ausgewählt.

Um dem Fahrer eine haptische Rückmeldung des Schalt- und Wählvorgangs zu geben, sind in der Betätigungseinrichtung 4 Rastelemente 17, 18 und Kurvenelemente 19, 20 angebracht. Das Rastelement 17 (in den Ansprüchen weiteres Rastelement genannt) bildet mit dem Kurvenelement 19 (in den Ansprüchen weiteres Kurvenelement genannt) eine Arretiereinrichtung zur Sicherung der Schalthebelpositionen in den Schaltgassen. Sie besteht aus einer am Kugelelement 3 in Verlängerung der Wählachse befestigten rohrförmigen Aufnahme 21 für eine weitere Feder 22, die das als Kugel 28 ausgebildete Rastelement 17 am Kurvenelement 19 unter Vorspannung anliegend hält. Die Oberfläche des Kurvenelements 19 ist so gestaltet, daß das Rastelement 17 in drei verschiedenen Positionen festlegbar ist und daß an den beiden außenliegenden Positionen Endanschläge 23 für das Rastelement 17 ausgebildet sind. Befindet sich das Rastelement 17 in einer seiner Endpositionen am Kurvenelement 19, so ist jeweils ein Gang eingelegt, während die mittlere Position den Schalthebel 1 in der Mitte der Schaltgasse fixiert und für die Wählbewegung freigibt.

Die haptische Rückmeldung für den Fahrer bei der Wählbewegung wird durch das Rastelement 18, das durch die am Gehäuse der Betätigungseinrichtung 4 festgelegte Feder 24 an dem Kurvenelement 20 anliegend unter Vorspannung gehalten wird, erzeugt. Das Kurvenelement 20 wirkt so mit dem Rastelement 18 zusammen, daß beide sich selbsttätig in einer Position zueinander festlegen. Diese Position kann zum Beispiel der Position der Schaltgasse für den dritten und vierten Gang entsprechen. Wird der Schalthebel 1 aus dieser Position in eine der beiden Richtungen für die Wählbewegung ausgelenkt, so benötigt der Fahrer dafür, je nach Formgebung des Kurvenelements 20 mit unregelmäßig, unsymmetrisch ansteigenden Flanken, unterschiedliche Betätigungskraft. Es wird zum Beispiel die Betätigungskraft für den Rückwärtsgang stark erhöht, damit ein versehentliches Einlegen dieses Ganges verhindert wird. Ebenso ist es günstig die Betätigungskraft für den fünften Gang etwas höher einzustellen, während das Erreichen der Schaltgasse für den ersten und zweiten Gang durch wenig Kraftaufwand ermöglicht wird. In den beiden Endpositionen sind Endanschläge 25 für das Rastelement 18 ausgebildet, die die Wählbewegung begrenzen.

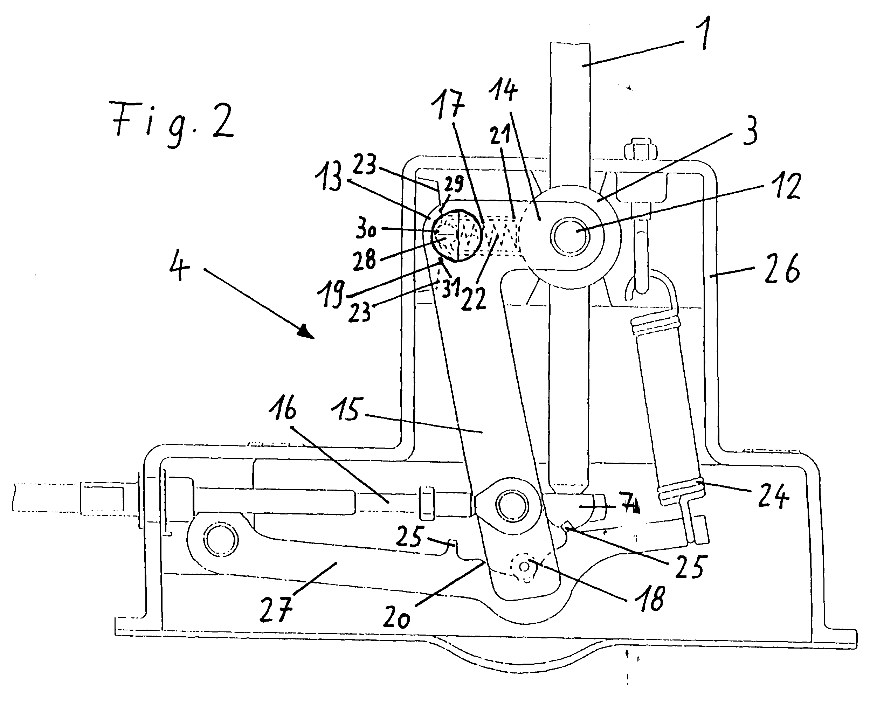

Figur 2 zeigt die Betätigungseinrichtung 4 mit längs aufgeschnittenem Gehäuse 26. Der nur mit seinem unteren Bereich dargestellte Schalthebel 1 ist über das Kugelelement 3 im Gehäuse 26 beweglich gelagert. Die Schaltbewegung des Schalthebels 1 entlang der Schaltgassen erfolgt im wesentlichen in der Zeichenebene, während die Wählbewegung des Schalthebels 1 senkrecht dazu aus der Zeichenebene heraus oder in diese hinein ausgeführt wird. Im unteren Bereich des Schalthebels 1 ist der Seilzug 7 befestigt, der die Schaltbewegung zum nicht gezeichneten Getriebe hin überträgt. Die Wählbewegung des Schalthebels 1 wird durch den am Kugelelement 3 in der Schaltachse angebrachten, nach der Seite aus der Zeichenebene heraus gerichteten Fortsatz 12 auf den einen Schenkel 14 des in der Schaltachsenebene parallel zur Schaltachse schwenkbar im Gehäuse 26 gelagerten Winkelhebels 13 übertragen, der kardanisch beweglich mit dem Fortsatz 12 verbunden ist. Am anderen Schenkel 15 ist der weitere Seilzug 16 angebracht, der die Wählbewegung zum nicht gezeichneten Getriebe überträgt.

Zusätzlich ist am anderen Schenkel 15 des Winkelhebels 13 das Rastelement 18 angebracht, das auf einem Teil der Oberfläche eines Schlepphebels 27, die das Kurvenelement 20 bildet, abwälzt. Der Schlepphebel 27 ist am einen Ende schwenkbar im Gehäuse 26 parallel zur Schaltachse gelagert, sein anderes Ende wird durch die im Gehäuse 26 aufgehängte Feder 24 gegen das Rastelement 18 vorgespannt gehalten. Damit bildet die Oberfläche des Kurvenelements 20, die als eine Vertiefung mit unregelmäßig, unsymmetrisch ansteigenden Flanken ausgebildet ist, mit dem Rastelement 18 die Rückführeinrichtung für den Schalthebel 1 in eine bestimmte Neutralposition und die Widerstandseinrichtung zur Beeinflussung der Betätigungskraft beim Wählen der Schaltgassen. Die gezeichnete Stellung zwischen Rastelement 18 und Kurvenelement 20 entspricht der Neutralposition, auf die sich die beiden Elemente selbsttätig einstellen, wenn der Schalthebel 1 losgelassen wird. Durch die unregelmäßig ansteigenden Flanken der Oberfläche des Kurvenelements 20 muß der Fahrer beim Wählen einer anderen Schaltgasse jeweils eine bestimmte Betätigungskraft gegen die Spannung der Feder 24 aufbringen. Das gibt ihm eine haptische Rückmeldung aus der er die gewählte Schaltgasse erkennen kann. Die Endanschläge 25 für das Rastelement 18 begrenzen die Wählbewegung.

Die Arretiereinrichtung zur Sicherung der Schalthebelpositionen in den Schaltgassen ist ebenfalls in der Betätigungseinrichtung 4 untergebracht. Sie besteht aus dem Rastelement 17 und dem Kurvenelement 19, die gegeneinander verschiebbar in drei verschiedenen Positionen zueinander festlegbar sind. Das Rastelement 17 besteht aus der am Kugelelement 3 in Verlängerung der Wählachse angebrachten rohrförmigen Aufnahme 21 für die durch die weitere Feder 22 belastete Kugel 28. Diese wälzt an dem am Gehäuse 26 angebrachten Kurvenelement 19 ab, an dem sie durch die Kraft der vorgespannten weiteren Feder 22 anliegend gehalten wird. Die Oberfläche des Kurvenelements 19 ist symmetrisch, regelmäßig geteilt, höckerartig mit drei Vertiefungen 29, 30, 31 ausgebildet. Endanschläge 23 für das Rastelement 17 begrenzen die Schalthebelbewegung in der jeweiligen Schaltgasse. Die gezeichnete Lage der Kugel 28 in der mittleren Vertiefung 30 entspricht der Schalthebelposition in der Wählgasse zum Ausführen der Wählbewegung. Befindet sich die Kugel 28 in einer der beiden außenliegenden Vertiefungen 29, 31, so ist ein Gang eingelegt.

Es ergibt sich von selbst, daß die Positionen der miteinander korrespondierenden Rastelemente 17, 19 und Kurvenelemente 18, 20 vertauscht werden können. So kann zum Beispiel das Rastelement 17 am Gehäuse 26 angebracht werden, während das Kurvenelement 19 dann am Kugelelement 3 ausgebildet sein muß. Dasselbe gilt auch für die Rast- und Kurvenelemente 18, 20.

## Patentansprüche

1. Betätigungseinrichtung (4) zum Steuern des Gangwechsels eines Getriebes (2) eines Kraftfahrzeugs, bei dem die Betätigungseinrichtung (4) und das Getriebe (2) räumlich getrennt sind und bei dem die Schalt- und Wählbewegungen der Betätigungseinrichtung (4) über zwei Schaltstangen oder zwei Schaltzüge (7, 16) zum Getriebe (2) übertragen werden, mit einem Schalthebel (1) zum Auswählen der Schaltgassen und Schalten der Gänge, mit einer Rückführeinrichtung, um den Schalthebel (1) in einer bestimmten Neutralposition zu halten, und mit mindestens einer Widerstandseinrichtung zur Beeinflussung der Betätigungskraft beim Wählen der Schaltgassen,
**dadurch gekennzeichnet,**
- daß die Betätigungseinrichtung (4) eine Arretiereinrichtung zur Sicherung der Schalthebelpositionen in den Schaltgassen besitzt, und
- daß die Rückführeinrichtung und die Widerstandseinrichtung aus einem Rastelement (18) und einem Kurvenelement (20) bestehen, die gegeneinander verschiebbar und in einer Position zueinander festlegbar sind.

2. Betätigungseinrichtung (4) nach Anspruch 1, dadurch gekennzeichnet, daß die Arretiereinrichtung aus einem weiteren Rastelement (17) und einem weiteren Kurvenelement (19) besteht, die gegeneinander verschiebbar und in drei verschiedenen Positionen zueinander festlegbar sind.

3. Betätigungseinrichtung (4) nach Anspruch 1 oder 2, dadurch gekennzeichnet, daß die Rastelemente (17, 18) an ihren zugehörigen Kurvenelementen (19, 20) durch die Kraft je einer vorgespannten Feder (22, 24) anliegend gehalten werden.

4. Betätigungseinrichtung (4) nach Anspruch 3, bei der der Schalthebel (1) über ein Kugelelement (3) in dem Gehäuse (26) der Betätigungseinrichtung gelagert und an seinem unteren Ende mit einem Seilzug (7) verbunden ist, der die Schaltbewegung des Schalthebels (1) zum Getriebe (2) überträgt, wobei das Kugelelement (3) einen nach der Seite gerichteten Fortsatz (12) in der Schaltachse besitzt, an dessen Ende ein Schenkel (14) eines in der Schaltachsenebene parallel zur Schaltachse schwenkbar im Gehäuse (26) gelagerten Winkelhebels (13) kardanisch beweglich angebracht ist, dessen anderer Schenkel (15) mit einem weiteren Seilzug (16) verbunden ist, der die Wählbewegung des Schalthebels (1) zum Getriebe (2) überträgt, **dadurch gekennzeichnet,**
- daß am anderen Schenkel (15) das eine Rastelement (18) ausgebildet ist, das an einem im Gehäuse (26) parallel zur Schaltachse an einem Ende schwenkbar gelagerten Schlepphebel (27) abwälzt, dessen Oberfläche teilweise das eine Kurvenelement (20) bildet und der mit einer an seinem anderen Ende und im Gehäuse (26) aufgehängten Feder (24) gegen das eine Rastelement (18) vorgespannt gehalten wird, und
- daß am Kugelelement (3) in Verlängerung der Wählachse das weitere Rastelement (17) ausgebildet ist, wobei das Kugelelement (3) eine rohrförmige Aufnahme (21) für eine durch die eine Feder (22) belastete Kugel (28) aufweist, die an dem am Gehäuse (26) angebrachten weiteren Kurvenelement (19) abwälzt.

5. Betätigungseinrichtung (4) nach Anspruch 4, dadurch gekennzeichnet, daß die Oberfläche des weiteren Kurvenelements (19) symmetrisch, regelmäßig geteilt, höckerartig mit drei dazwischen liegenden Vertiefungen (29, 30, 31) ausgebildet ist.

6. Betätigungseinrichtung (4) nach Anspruch 4 oder 5, dadurch gekennzeichnet, daß die Oberfläche des einen Kurvenelements (20) als eine Vertiefung mit unregelmäßig, unsymmetrisch ansteigenden Flanken ausgebildet ist.

7. Betätigungseinrichtung (4) nach einem der Ansprüche 2 bis 6, dadurch gekennzeichnet, daß an den Kurvenelementen (19, 20) Endanschläge (23, 25) für die Rastelemente (17, 18) ausgebildet sind.

## Claims

1. An actuating device (4) for controlling the change of gear of a transmission system (2) in a motor vehicle, wherein the actuating device (4) and the transmission system (2) are spatially separate and wherein the gear-shifting and selecting movements of the actuating device (4) are transmitted via two gear-shifting rods or cables (7, 16) to the transmission system (2), the device comprising a gear-shifting lever (1) for selecting the shift lanes and for shifting the gears, a return device for holding the gear-shifting lever (1) in a given neutral position, and at least one resistance device for influencing the actuating power needed when selecting the lanes,
**characterised in that**
- the actuating device (4) has a locking device for securing the gear-shifting lever in position in the lanes, and
- the return device and the resistance device comprise a catch element (18) and a cam element (20) which are movable relative to one another and are lockable in a position relative to one another.

2. An actuating device (4) according to claim 1, characterised in that the locking device comprises an additional catch element (17) and an additional cam element (19) which are movable relative to one another and are lockable in three different positions relative to one another.

3. An actuating device (4) according to claim 1 or claim 2, characterised in that the locking elements (17, 18) are held against their respective cam elements (19, 20) by the force of a respective prestressed spring (22, 24).

4. An actuating device (4) according to claim 3 wherein the gear-shifting lever (1) is mounted via a ball element (3) in the casing (26) of the actuating device and its bottom end is connected to a cable (7) which transfers the motion of the gear-shifting lever (1) to the transmission system (2), wherein the ball element (3) has a lateral projection (12) along the gear-shifting axis, and one arm (14) of a toggle lever (13) mounted in the casing (26) so as to be pivotable parallel to the gear-shifting axis and in the plane of the gear-shifting axis is disposed so as to be movable in all directions whereas the other arm (15) is connected to another cable (16) which transmits the selecting motion of the gear-shifting lever (1) to the transmission system (2), **characterised in that**
- one catch element (18) is formed on the other arm (15) and rolls on a drag lever (27) mounted for pivoting at one end in the casing (26) parallel to the gear-shifting axis, the surface of the lever partially forming one cam element (20) and the lever being held prestressed against a catch element (18) by a spring (24) suspended at its other end and in the casing (26), and
- the other catch element (17) is formed on the ball element (3) in a prolongation of the selection axis, and the ball element (3) has a tubular receiver (21) for a ball (28) loaded by a spring (22) and rolling on the additional cam element (19) mounted on the casing (26).

5. An actuating device (4) according to claim 4, characterised in that the surface of the additional cam element (19) is symmetrical, regularly divided and humped with three recesses (29, 30, 31) between the humps.

6. An actuating device (4) according to claim 4 or claim 5, characterised in that the surface of one cam element (20) is in the form of a recess with irregular, asymmetrically rising flanks.

7. An actuating device (4) according to any of claims 2 to 6, characterised in that end abutments (23, 25) for the catch elements (17, 18) are formed on the cam elements (19, 20).

## Revendications

1. Installation de commande (4) pour commander le changement de vitesses d'une boîte de vitesses (2) d'un véhicule automobile, dont l'installation de commande (4) et la boîte de vitesses (2) sont séparées dans l'espace, et dont les mouvements de commutation et de sélection de l'installation de commande (4) sont transmis par des tiges de commutation ou deux câbles de commutation (7, 16) vers la boîte de vitesses (2), ainsi qu'un levier de commutation (1) pour sélectionner les chemins de commutation et passer les vitesses, une installation de retour pour maintenir le levier de commutation (1) dans une certaine position neutre et au moins une installation de rétablissement pour influencer la force d'actionnement lors de la sélection des chemins de commutation,
caractérisée en ce que
- l'installation de commutation (4) possède une installation de blocage pour fixer les positions du levier de commutation dans les chemins de commutation et
- l'installation de retour et l'installation de rétablissement se composent d'un élément d'encliquetage (18) et d'un élément de courbe (20) coulissant l'un par rapport à l'autre et qui peuvent être fixés l'un par rapport à l'autre dans une position.

2. Installation de commande (4) selon la revendication 1,
caractérisée en ce que
l'installation de blocage se compose d'un autre élément d'encliquetage (17) et d'un autre élément de courbe (19) coulissant l'un par rapport à l'autre, et qui peuvent être fixés l'un par rapport à l'autre dans trois positions différentes.

3. Installation de commande (4) selon la revendication 1 ou 2,
caractérisée en ce que
les éléments d'encliquetage (17, 18) sont maintenus contre leur élément de courbe respectif (19, 20) par la force d'un ressort précontraint (22, 24) respectif.

4. Installation de commande (4) selon la revendication 3, dont le levier de commutation (1) est monté par l'intermédiaire d'un élément de rotule (3) dans le boîtier (26) de l'installation de commande et dont l'extrémité inférieure est reliée à un câble (7) transmettant les mouvements de commutation du levier de commutation (1) vers la boîte de vitesses (2), l'élément de rotule (3) ayant un prolongement (12) dirigé vers le côté dans l'axe de commutation, dont l'extrémité porte une branche (14) mobile à la manière d'un cardan et appartenant à un levier coudé (13) monté pivotant dans le boîtier (16) dans un plan de l'axe de commutation parallèle à l'axe de commutation et dont l'autre branche (17) est reliée à un autre câble (16) transmettant les mouvements de sélection du levier de commutation (1) vers la boîte de vitesses (2),
caractérisée en ce que
- l'autre branche (15) comporte un élément d'encliquetage (18), qui roule sur un levier tiré (27) monté pivotant par une extrémité, dans le boîtier (26), parallèlement à l'axe de commutation, et dont la surface formant partie d'un élément de courbe (20), levier dont l'autre extrémité est maintenue précontrainte contre l'élément d'encliquetage (18) par un ressort (24) accroché au boîtier (26) et
- l'élément de rotule (3) forme dans le prolongement de l'axe de sélection, l'autre élément d'encliquetage (17), l'élément de rotule (3) ayant un logement tubulaire (21) pour une bille (28) chargée par un ressort (22), cette bille roulant sur l'autre élément de courbe (19) prévu sur le boîtier (26).

5. Installation de commande (4) selon la revendication 4,
caractérisée en ce que
la surface de l'autre élément de courbe (19) est subdivisée symétriquement de manière régulière, en forme de bossage par trois cavités intermédiaires (29, 30, 31).

6. Installation de commande (4) selon la revendication 4 ou 5,
caractérisée en ce que
la surface d'un élément de courbe (20) est réalisée sous la forme d'une cavité avec des flancs irréguliers, remontant de manière non symétrique.

7. Installation de commande (4) selon l'une des revendications 2 à 6,
caractérisée en ce que
des butées de fin de course (23, 25) pour l'élément de courbe (19, 20) sont réalisées pour l'élément d'encliquetage (17, 18).
